## Europäisches Patentamt

## European Patent Office

## Office européen des brevets

(19)

(11) Numéro de publication: **0 220 982 B1**

(12) **FASCICULE DE BREVET EUROPEEN**

(45) Date de publication du fascicule du brevet:
**28.12.88**

(51) Int. Cl.⁴: **F 16 D 23/14**

(21) Numéro de dépôt: **86402199.3**

(22) Date de dépôt: **06.10.86**

(54) **Montage de butée de débrayage, notamment pour véhicule automobile.**

(30) Priorité: **09.10.85 FR 8514924**

(43) Date de publication de la demande:
**06.05.87 Bulletin 87/19**

(45) Mention de la délivrance du brevet:
**28.12.88 Bulletin 88/52**

(84) Etats contractants désignés:
**DE ES FR GB IT**

(56) Documents cités:
**DE-A- 3 113 463**
**FR-A- 2 518 678**
**GB-A- 2 062 799**

(73) Titulaire: **FRAYMON S.A., Carretera General de Madrid Km 2, Murcia (ES)**

(72) Inventeur: **Martinez Corral, Cecilio, C/Agastia 74, Madrid 27 (ES)**
Inventeur: **Lopez Perez, Carlos, Calle Arganda 28, 7o A, Madrid 5 (ES)**

(74) Mandataire: **CABINET BONNET-THIRION, 95 Boulevard Beaumarchais, F-75003 Paris (FR)**

## Description

La présente invention concerne d'une manière générale les butées de débrayage, notamment par véhicules automobiles.

Elle vise plus particulièrement une butée de débrayage qui, dite tirée, est destinée à agir en traction sur un dispositif débrayeur d'un embrayage à commander, par exemple les extrémités des doigts d'un diaphragme.

La difficulté, en l'espèce, est que, bien que nécessairement disposée, pour l'essentiel, à l'extérieur de l'embrayage, la butée de débrayage doit cependant être en mesure d'intervenir à l'intérieur de celui-ci, sur la face interne de son dispositif débrayeur, pour pouvoir exercer une traction sur ce dernier.

Il a été proposé, à cet effet, dans certains montages de butées de débrayage, et c'est le cas, notamment, dans le montage de butée de débrayage décrit dans la FR-A-2 557 234, de mettre en oeuvre, entre la butée de débrayage et le dispositif débrayeur à commander, une pièce, dite pièce d'accostage, qui convenablement rapportée sur ledit dispositif débrayeur, comporte radialement, du côté de celui-ci opposé à la butée de débrayage, une collerette d'appui par laquelle elle est apte à agir sur lui, en coopérant avec des moyens de solidarisation en traction qui, établis entre une telle pièce d'accostage et une pièce, sont propres à assurer une liaison axiale entre lesdites pièces dans le sens axial allant du dispositif débrayeur à ladite butée de débrayage.

En pratique, dans ladite FR-A-2 557 234 les moyens de solidarisation en traction comportent, d'une manière générale, un organe de couplage élastiquement déformable radialement, qui est porté par l'une des pièces à solidariser en traction et est destiné à coopérer en butée avec une portée d'entraînement ménagée globalement transversalement à cet effet sur l'autre des pièces.

Une telle disposition a notamment pour avantage de permettre d'équiper par avance de la pièce d'accostage le dispositif débrayeur de l'ensemble à commander, avant même le montage du mécanisme d'embrayage correspondant, et d'assurer ensuite, lors de l'assemblage de l'ensemble la venue en prise par simple clipsage de la butée de débrayage avec la pièce d'accostage.

Dans certaines formes de réalisations décrites dans la demande de brevet français mentionnée ci-dessus, l'organe de couplage est un jonc annulaire, dit jonc de solidarisation, qui est au moins partiellement engagé radialement dans une gorge annulaire de retenue, ménagée pour lui sur l'une des pièces à solidariser en traction, l'autre de ces pièces comportant la portée d'entraînement avec laquelle il doit coopérer pour une telle solidarisation en traction.

Grâce à cette disposition de l'organe de couplage, il suffit en effet d'engager axialement la butée de débrayage dans l'ouverture centrale du dispositif débrayeur de ce mécanisme d'embrayage. Au cours d'un tel engagement, le jonc de solidarisation s'efface élastiquement et, reprenant ensuite sa configuration initiale entre les portées avec lesquelles il doit coopérer, assure la solidarisation axiale recherchée entre la pièce d'accostage et la butée de débrayage.

De ce point de vue, une telle disposition donne satisfaction.

Mais il peut se poser le problème d'un désaccouplement éventuel de la butée de débrayage vis-à-vis du mécanisme, en vue par exemple de son changement.

Une solution a été proposée dans la demande de brevet français mentionnée ci-dessus, dans laquelle, une pièce, dite pièce de désolidarisation, est montée coulissante axialement sur la pièce d'attaque de la butée, en étant distincte de celle-ci, et qui, comme cette pièce d'attaque, appartient elle aussi à la butée de débrayage.

En pratique pour permettre le désaccouplement de la butée, la pièce de désolidarisation comporte, d'une part, un flanc incliné formant l'un des flancs de la gorge dans laquelle est, au moins partiellement, engagé le jonc de solidarisation, l'autre des flancs étant portée par la pièce d'attaque, et, d'autre part, une collerette se présentant radialement en saillie à la périphérie de ladite pièce de désolidarisation.

Ladite collerette présente un flanc axialement tourné du côté opposé au dispositif débrayeur et forme transversalement, à distance de la butée de débrayage, et plus précisément du roulement à billes de celle-ci, un épaulement propre à l'action manuelle d'un quelconque organe de maneouvre sur ladite pièce de désolidarisation.

De ce fait par action d'un quelconque organe de manoeuvre, par exemple un tournevis, sur la pièce de désolidarisation et plus particulièrement sur ledit épaulement de la collerette de la pièce de désolidarisation, il suffit de refouler axialement cette pièce de désolidarisation en direction du jonc de solidarisation, l'organe de manoeuvre prenant appui, par exemple, sur le capot de la butée et plus précisément sur le bord tombé de celui-ci.

Par son flanc incliné, formant l'un des flancs de la gorge dans laquelle est dipsosé le jonc de solidarisation, la pièce de sésolidarisation ainsi déplacée axialement par coulissement, refoule élastiquement radialement ce jonc hors de la gorge et permet ainsi le dégagement de la butée de débrayage en appliquant à celle-ci un simple mouvement de retrait.

Ce dispositif, bien que donnant entièrement satisfaction, fait appel à une collerette d'appui dépourvue de toute douille traversant le dispositif débrayeur. Si l'on veut adopter une collerette d'appui avec douille traversant le dispositif débrayeur, on remarque alors qu'une solution avec une pièce de désolidarisation portant une rondelle Belleville s'appuyant sur le dispositif débrayeur n'est pas bien adaptée, notamment pour assurer un bon désaccouplement, car elle est source d'une augmentation de l'encombrement axial.

La présente invention a pour objet de palier ces inconvénients et donc de créer une disposition permettant un désaccouplement avec une pièce d'accostage, à collerette d'appui et à douille axiale traversant le dispositif débrayeur, et une pièce de désolidarisation sans interposition d'une rondelle Belleville entre la pièce de désolidarisation et la tranche de la douille, tout en procurant d'autres avantages.

L'invention propose à cet effet un montage de butée de débrayage, du genre comportant, pour l'attelage d'une butée de débrayage à un dispositif débrayeur d'un embrayage, une pièce, dite pièce d'accostage, dotée d'une portée d'engagement située à l'extrémité d'une douille s'étendant globalement axialement, qui est convenablement rapportée sur ledit dispositif débrayeur et des moyens de solidarisation en traction, qui, établis entre la pièce d'accostage et une pièce, dite pièce d'attaque, appartenant à la butée de débrayage, sont propres à assurer une liaison axiale entre lesdites pièces allant du dispositif débrayeur à ladite butée de débrayage, lesdits moyens de solidarisation en traction comportant un jonc, dit jonc de solidarisation, qui, élastiquement déformable radialement, est établi annulairement autour de l'axe de l'ensemble et qui est, au moins en partie, en prise, d'une part, du côté de la butée de débrayage avec une portée de la pièce d'accostage et, d'autre part, du côté opposé, avec une portée de la pièce d'attaque, ladite portée de la pièce d'attaque étant formée par l'un des flancs d'une gorge prévue annulairement à cet effet sur la pièce d'attaque, l'autre des flancs étant mobile axialement par rapport au précédent et appartenant à une pièce mobile, dite pièce de désolidarisation, montée coulissante axialement sur la pièce d'attaque en étant distincte de celle-ci, caractérisé en ce que la pièce de désolidarisation porte des moyens de positionnement, élastiquement déformables radialement vers l'intérieur, de diamètre externe supérieur, à l'état libre, au diamètre interieur de la portée d'engagement de la douille de la pièce d'accostage et en ce que lesdits moyens de positionnement sont adaptés à prendre appui, au montage, sur ladite portée d'engagement en sollicitant ladite pièce de désolidarisation en direction d'une butée d'arrêt prévue transversalement pour elle sur la butée de débrayage.

Suivant une autre caractéristique de l'invention les moyens de positionnement consistent en au moins une patte globalement axiale, d'un seul tenant avec la pièce de désolidarisation, élastiquement déformable radialement vers l'intérieur.

Suivant une autre caractéristique la patte axiale est située axialement en retrait par rapport à l'extrémité de la pièce de désolidarisation portant le flanc mobile de la gorge de la pièce d'accostage.

Grâce à cette disposition le flanc mobile porté par la pièce de désolidarisation est positionné, au montage, de manière déterminée et constante par rapport à l'autre des flancs, dit fixe, de la gorge portée par la pièce d'attaque.

Suivant une autre caractéristique la pièce de désolidarisation présente, pour action d'un organe de manoeuvre, en saillie à sa périphérie externe, une collerette radiale, à son extrémité opposée à celle portant le flanc mobile, de diamètre externe supérieur au diamètre de la paroi axiale entourant le roulement à billes que comporte la butée de débrayage.

Il suffit donc d'utiliser la place disponible sur le pourtour circulaire libre de la butée pour pouvoir manoeuvrer la pièce de désolidarisation par action d'un organe de manoeuvre, sur la face dirigée vers la butée de ladite collerette, ce qui est favorable à une réduction de l'encombrement axial de l'ensemble.

Suivant une autre caractéristique la collerette est dotée d'une saignée radiale, dans le prolongement d'une saignée axiale formée dans la pièce de désolidarisation, et d'un secteur aminci, disposé symétriquement diamétralement opposé à la saignée radiale.

Suivant une autre caractéristique la collerette présente, sur sa face dirigée vers la butée de débrayage, une plaque d'appui accolée et maintenue sur ladite face.

Cette plaque permet, après montage de la pièce de désolidarisation sur la pièce d'attaque, d'éviter une ouverture de ladite pièce notamment lors de l'action d'un organe de manoeuvre et sert en outre de plaque d'usure.

Suivant une autre caractéristique de l'invention le flanc, dit mobile, de la gorge de la pièce d'attaque, oblique sur l'axe de l'ensemble s'éloignant dudit axe en se rapprochant du dispositif débrayeur, a un diamètre externe inférieur au diamètre médian du jonc monté sur le fond de ladite gorge.

Grâce à cette disposition le flanc mobile de la gorge coulisse sur la pièce d'attaque jusqu'au contact avec le flanc fixe de ladite gorge et autorise ainsi l'expulsion complète du jonc de solidarisation en rétrécissant la gorge.

Suivant une autre caractéristique la pièce d'accostage comporte une gorge de retenue présentant de part et d'autre de son fond annulaire, d'une part, une portée inclinée sur l'axe de l'ensemble s'éloignant dudit axe en s'écartant de la butée de débrayage et, d'autre part, une portée de retenue, inclinée sur l'axe de l'ensemble s'éloignant dudit axe en se rapprochant de la butée de débrayage.

Suivant une autre caractéristique la portée de retenue de la gorge de la pièce d'accostage est raccordée à un talon, dit talon d'arrêt, de diamètre interne inférieur au diamètre externe de la portée de centrage de la pièce d'attaque.

Suivant une autre caractéristique le talon d'arrêt comporte une portée d'arrêt, se raccordant à la portée de retenue, de forme complémentaire à la portée de centrage.

De ce fait ce talon, en servant de butée fixe, empêche un mouvement indésirable, dans le sens axial du déplacement allant de la butée de débrayage au dispositif débrayeur, de la pièce d'attaque par rapport à la pièce d'accostage et sert aussi d'indicateur de fin de course lors du montage.

Les caractéristiques et avantages de l'invention ressortiront de la description qui va suivre à titre d'exemple, en référence aux dessins annexés sur lesquels

la figure 1 est une vue en coupe axiale d'un montage de butée de débrayage lors de l'approche de la butée,

la figure 2 est une vue latérale suivant la flèche A de la figure 1 montrant la collerette de la pièce de désolidarisation,

les figures 3, 4, 5 et 6 sont des vues, à plus grande échelle illustrant le mode de montage et de désaccouplement de la butée de débrayage par rapport au dispositif débrayeur.

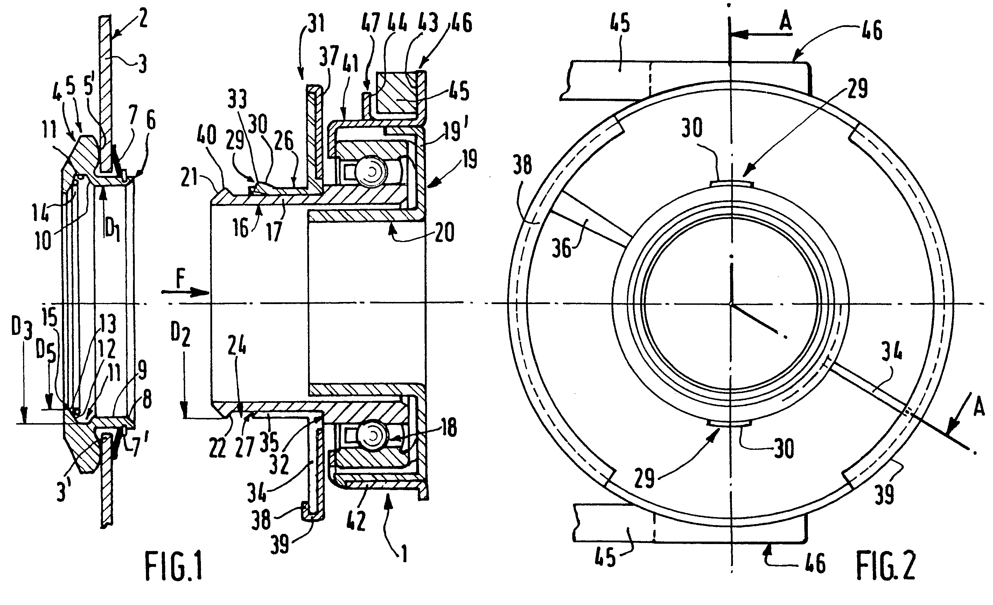

Tel qu'illustré sur ces figures et ainsi qu'il est mieux visible à la figure 1, il s'agit globalement de l'attelage d'une butée de débrayage 1 au dispositif débrayeur 2 d'un quelconque embrayage, dans un sens axial au moins, correspondant à l'exercice d'une traction sur ledit dispositif débrayeur par ladite butée de débrayage.

Le dispositif débrayeur 2 est ici formé par les extrémités des doigts radiaux 3 d'un diaphragme, qui, ainsi qu'on le sait, comporte une partie périphérique formant rondelle Belleville, pour serrage d'au moins un disque de friction entre deux plateaux, et une partie centrale fragmentée en doigts radiaux.

Globalement et de manière connue en soi, pour l'attelage de la butée 1 au dispositif débrayeur 2, il est rapporté sur ce dernier, à la faveur de l'ouverture centrale 3' que possède ledit dispositif débrayeur, une pièce 4, dite pièce d'accostage.

Cette pièce d'accostage 4 présente une collerette 5 d'orientation radiale avec une portée d'appui 5' pour action sur le dispositif débrayeur 2 et, d'un seul tenant avec celle-ci, une douille 6 qui, s'étendant globalement axialement, traverse le dispositif débrayeur 2 à la faveur de l'ouverture 3' de celui-ci et à l'extrémité de laquelle, du côté de a butée 1, sont disposés à sa périphérie externe des moyens élastiques, ici une rondelle Belleville 7, qui sollicitent en permanence la portée d'appui 5' de ladite pièce d'accostage en direction du dispositif débrayeur 2. En pratique, de manière connue en soi, les doigts 3 du diaphragme sont pincés entre la portée 5' et la rondelle 7 qui s'appuie à sa périphérie interne sur un circlips 7' engagé dans une gorge pratique à l'extrémité de la douille 6.

Du côté dirigé vers la butée de débrayage 1, la douille 6 présente à l'extrémité de son alésage interne une portée d'engagement 8, ici tronconique, dont la concavité est tournée vers ladite butée.

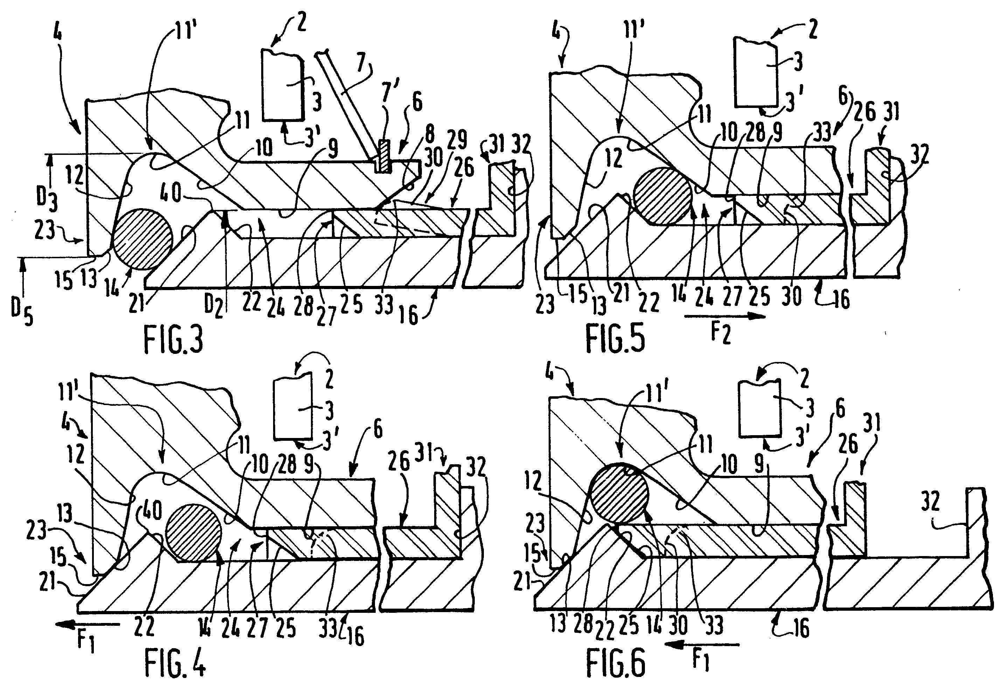

Une portée cylindrique de guidage 9, de diamètre D1, fait suite à cette portée tronconique 8 et se raccorde à une portée 10, inclinée sur l'axe de l'ensemble, s'éloignant dudit axe en s'écartant de la butée de débrayage 1. Cette portée constitue l'un des flancs d'une gorge de retenue 11' annulaire dont le fond 11 est profilé et a un diamètre extrême D3 (fig. 3). Cette gorge 11' est située dans la zone de raccordement entre la douille 6 et la collerette 5.

Ici le fond 11, en section transversale, a un profil globalement en demi-cercle conforme à celui d'un jonc de solidarisation en traction 14 décrit ci-après.

Le fond 11 se raccorde à une portée de retenue 12 inclinée sur l'axe de l'ensemble s'éloignant dudit axe en se rapprochant de la butée de débrayage 1, c'est-à-dire de sens inverse par rapport à la portée 10, celle-ci étant concave dans le sens axial allant du dispositif débrayeur à la butée 1 tandis que la portée 12 est convexe pour le même sens. Cette portée 12 forme donc l'autre flanc de la gorge de retenue 11'.

En outre, à l'extrémité de la gorge de retenue 11 et plus précisément de la portée de retenue 12 se trouve une portée d'arrêt 13, inclinée sur l'axe de l'ensemble, s'écartant dudit axe en se rapprochant de la butée de débrayage 1. Ladite portée 13 délimite, avec un alésage interne 15 de la pièce d'accostage 4 et la face de la pièce d'accostage 4 tournée à l'opposé du dispositif débrayeur 2, un talon d'arrêt 23 de diamètre interne D5. En pratique des moyens de solidarisation en traction sont établis entre la pièce d'accostage 4 et la pièce d'attaque 16 décrite ci-après et comportent ici un jonc 14 élastiquement déformable radialement vers l'extérieur, portés à jeu par la gorge de retenue 11', en étant à l'état libre, à distance du fond 11 de la gorge de retenue 11' au moins partiellement au contact de la portée 12.

Dans les formes de réalisation représentées, la butée de débrayage 1 comporte une pièce d'attaque 16 pour action, notamment par l'intermédiaire du jonc 14, sur la pièce d'accostage 4. La pièce d'attaque 16 est ici constituée par le prolongement 17 de la bague interne d'un roulement à billes 18, attelé axialement à un élément de manoeuvre représenté schématiquement en 19 sur lequel agissent les moyens de manoeuvre, par exemple les extrémités des doigts 45 d'une fourchette d'embrayage. Cet élément de manoeuvre 19 possède un manchon 20 pour coulissement, par exemple, sur une trompette de débrayage entourant l'arbre d'entrée de la boîte de vitesse. Sur l'élément de manoeuvre 19, ici en matière synthétique, est rapporté un capot 41 qui comporte une paroi latérale annulaire 42 s'étendant axialement. De manière connue en soi la butée est à autocentrage maintenu, donc un jeu existe entre la bague interne du roulement 18 et le manchon 20, et tel que décrit dans la demande FR 2 508 125 du 18.06.1981, le capot 41 est lié à l'élément de manoeuvre 19 par des moyens d'enclipsages à pattes élastiquement déformables appartenant audit élément de manoeuvre 19 et à ouverture appartenant au capot 41, lesdites ouvertures formant un épaulement pour lesdites pattes. La paroi 42 porte, en position diamétralement opposées l'une par rapport à l'autre, une paire de deux faces opposées transversales d'appui 43, 44, qui, pour coopération avec les extrémités des doigts 45 de la fourchette de débrayage, s'étendent globalement transversalement. Les faces 43 appartiennent chacune à une patte 46 qui est d'un seul tenant avec le capot 41 en s'étendant transversalement sensiblement dans le plan du flasque radial 19', que comporte l'élément de manoeuvre 19 à son extrémité la plus éloignée de l'extrémité de la pièce d'attaque 16. Les faces 44 appartiennent chacune à une patte 47 solidaire du capot 41 en s'étendant transversalement à distance de la patte 46, pour permettre le logement des doigts 45 de la fourchette de débrayage.

A son extrémité libre, la pièce d'attaque 16 est dotée d'une portée tronconique de centrage 21, de forme complémentaire à celle de la portée d'arrêt inclinée 13, qui est prolongée, inclinée dans le sens contraire par rapport à ladite portée de centrage, par une portée d'entraînement 22 dirigée vers la butée de débrayage 1. L'intersection des deux portées forme une zone cylindrique de section circulaire 40 de diamètre D2 au plus égal au diamètre D1 de la portée de guidage 9 mais supérieur au diamètre D5 de l'alésage interne 15 du talon d'arrêt 23.

Cette portée d'entraînement 22 forme l'un des flancs d'une gorge 24, prévue annulairement à cet effet sur la butée de débrayage 1 et plus précisément sur la périphérie externe de la pièce d'attaque 16, l'autre des flancs 25 de cette gorge 24 est monté mobile axialement par rapport au flanc 22 de ladite gorge.

Tel que représenté, ce flanc 25 appartient à une pièce 26, dite pièce de désolidarisation, qui, distincte de la pièce d'attaque 16 est montée coulissante axialement sur celle-ci mais qui, comme cette pièce d'attaque 16, appartient elle aussi à ladite butée de débrayage.

En pratique, ce flanc 25, appartient à la tranche 27 dirigée vers le dispositif débrayeur 2 de la pièce de désolidarisation 26, et constitue la partie de la tranche 27 la plus près de l'axe de l'ensemble, oblique sur ledit axe, s'éloignant dudit axe en se rapprochant du dispositif débrayeur. Le bord extérieur ou diamètre externe de ce flanc oblique 25 a un diamètre inférieur au diamètre médian du jonc 14 monté sur la pièce d'attaque 16 (fig. 4) et plus précisément sur le fond de la gorge 24. Suivant l'invention la pièce de désolidarisation 26 porte, à son extrémité dirigée vers le dispositif débrayeur 2 au voisinage de la tranche 27, des moyens de positionnement 29 élastiquement déformables radialement vers l'intérieur, de diamètre externe supérieur, à l'état libre, au diamètre intérieur $D1$ de la portée d'engagement 8 adaptés à prendre appui sur la portée 8 en sollicitant, lors du montage, ladite pièce de désolidarisation en direction d'une butée d'arrêt 32 prévue transversalement pour elle sur la butée de débrayage 1. Ici cette butée d'arrêt 32 est formée par l'épaulement de la bague interne du roulement 18, le diamètre intérieur de la portée d'engagement 8 correspond au diamètre $D1$ de la portée de guidage.

En pratique les moyens de positionnement consistent en au moins une patte 30 globalement axiale, ici trois, d'un seul tenant avec la pièce de désolidarisation 26, élastiquement déformable radialement vers l'intérieur; lesdites pattes présentent à leurs extrémités dirigées vers le dispositif débrayeur, une portée arrondie 33 de contact et sont situées axialement en retrait par rapport à la tranche 27 de la pièce de désolidarisation. A l'état libre, c'est-à-dire en position déployée, les pattes 30 sont en saillie radiale.

Avantageusement cette pièce de désolidarisation 26 est en matière synthétique.

De plus, comme visible sur les figures 1 et 2 la pièce de désolidarisation 26 a en coupe une forme en L et comporte, pour action d'un organe de manoeuvre, une collerette radiale 31, en saillie à sa périphérie, disposée à l'extrémité de la pièce de désolidarisation 26 opposée à la tranche 27, de diamètre externe supérieur à celui de la paroi axiale 42 du capot 41.

Cette collerette radiale 31 est dotée, pour son montage sur la pièce d'attaque 16, d'une saignée radiale 34, débouchant radialement vers l'extérieur, dans le prolongement d'une autre saignée 35 axiale. Ici cette saignée axiale 35 s'étend de part et d'autre de la partie axiale de ladite pièce de désolidarisation 26 en se raccordant à la saignée radiale 34. En outre, ladite collerette 31 présente, opposé diamétralement par rapport à cette saignée 34, un secteur aminci en épaisseur 36, qui, de par sa faible étendue circonférentielle et de par son amincissement, permet d'obtenir une élasticité supplémentaire lors de l'ouverture des saignées 34 et 35 de la pièce de désolidarisation 26, pour le montage sur la pièce d'attaque 16, par exemple par dessus l'arête 21 de la pièce d'attaque 16.

Après son montage sur la pièce d'attaque 16, une plaque 27, dite plaque d'usure, est accolée à la face de ladite collerette 31 dirigée vers la butée de débrayage 1 et est maintenue par sertissage sur ladite face par les bords 38, 39 de ladite plaque. Plus précisément le bord externe de la plaque est replié axialement vers le dispositif débrayeur pour former le bord axiale 39 puis radialement vers l'axe de l'ensemble pour former le bord radial 38 en emprisonnant le bord périphérique externe de la collerette 31. De ce fait grâce à cette plaque 37 la collerette 31, ainsi que la partie axiale de la pièce de désolidarisation 26, ne peuvent plus s'ouvrir radialement.

Pour l'assemblage de l'ensemble et tel que mieux visible sur les figures 3, 4, 5 et 6, le montage est effectué de la manière suivante:

Dans la première phase (fig. 1), la butée de débrayage 1 avec sa pièce de désolidarisation 26 et sa collerette 31, telles que décrites ci-dessus, est présentée en vis-à-vis de la pièce d'accostage 4 portant le jonc de solidarisation 14.

Par action des doigts 45 de la fourchette sur les faces d'appui 44 des pattes 47, la butée se présente en face de l'ouverture centrale de la pièce d'accostage 4 jusqu'au contact de la portée de centrage 21 de la pièce d'attaque 16 avec la portée d'engagement 8 de la pièce d'accostage 4.

Après poursuite du mouvement, la butée 1, grâce aux deux portées 8, 21, se précentre par rapport à la pièce d'accostage 4 puis, le mouvement continuant, la pièce d'attaque 16 glisse et se centre par sa zone 40 le long de la portée cylindrique de guidage 9 de la pièce d'accostage 4 en entraînant avec elle la pièce de désolidarisation 26 et en particulier l'extrémité de ladite pièce de désolidarisation dirigé vers la butée de débrayage 1, qui pénètre sous la portée 9, jusqu'au moment où les moyens de positionnement, ici les pattes 30 en position déployée, viennent au contact, par leurs bords arrondis 33, de la portée tronconique 8 de la pièce d'accostage 4.

Après ce contact et en poursuivant le mouvement, la pièce de désolidarisation est sollicitée, grâce aux pattes 30 au contact de la portée 8, en direction de la butée de débrayage 1 et coulisse sur la périphérie externe de la pièce d'attaque 16 jusqu'au contact par sa partie arrière avec la butée d'arrêt 32 prévue transversalement pour elle sur la butée de débrayage 1.

A la suite de ce mouvement et tel que visible à la figure 3, la pièce de désolidarisation 26 est en butée sur la butée de débrayage en 32 et est en contact avec la portée 8. De ce fait, le flanc mobile 25, est positionné de manière déterminée par rapport à l'autre des flancs, dit fixe, de la gorge 24, ici la portée d'entraînement 22, et à la portée tronconique d'engagement 8 de la pièce d'accostage 4. En outre, la portée tronconique de centrage 21 de la pièce d'attaque 16 précentre les moyens de solidarisation, ici le jonc 14.

En poursuivant le mouvement, suivant la flèche F1 de la figure 4, la pièce d'accostage 4 étant par commodité considérée fixe, la butée de débrayage 1, ainsi que la pièce de désolidarisation 26 et sa collerette 31, se déplace dans le sens axial allant de la butée à la pièce d'accostage 4. Ce déplacement entraîne, de par leurs élasticités et leurs contacts avec la portée tronconique 8, l'introduction par escamotage dans l'ouverture de la pièce d'accostage 4, des pattes 30 élastiquement déformables vers l'intérieur et en même temps le jonc 14, de par son élasticité radiale, se déploie et glisse le long de la portée 21 et simultanément le long de la portée 12 jusqu'à ce que le diamètre extérieur dudit jonc soit approximativement située dans le fond 11 de la gorge de retenue 11', alors que son diamètre intérieur est situé au moins sur le diamètre D2 de la zone 40. On notera que, lorsque le jonc 14 est en contact avec la zone 40, un léger jeu existe entre ledit jonc de le fond 11 de la gorge 11'.

Après poursuite du mouvement, l'axe vertical du jonc 14 quitte la zone 40 et de par son élasticité radiale, revenant à sa position initiale, glisse respectivement le long de la portée 22 de la gorge 24 et le long de la portée 10 de la pièce d'accostage 4 jusqu'à ce que le jonc 14 vienne au contact, par son diamètre extérieur, avec le fond de la gorge 24.

Le mouvement se poursuit jusqu'à ce que la portée 21 de la pièce d'attaque 16 vienne au contact de la portée d'arrêt 13 du talon 23. Ce contact, procurant une résistance au mouvement, permet de faire savoir à l'opérateur que le jonc 14 se trouve dans la gorge 24 de la pièce d'attaque 16. On notera qu'alors (fig. 4) le jonc est monté à jeu entre les portées 22 et 10.

A la suite de cette opération il suffit, après avoir constaté que le jonc 14 se trouve dans la gorge 24, d'effectuer un mouvement en sens inverse, par appui des doigts 45 de la fourchette sur les flancs d'appui 43 des pattes 46, pour que le jonc 14 soit en contact avec la portée d'entraînement 22 de la pièce d'attaque 16 et avec la portée 10 de la pièce d'accostage 4 (fig. 5). Cette configuration permet alors d'assurer une liaison axiale entre la pièce d'accostage 4 et la pièce d'attaque 16 allant du dispositif débrayeur 2 à la butée 1 et de transmettre ainsi l'action axiale de débrayage. On notera que, lors des opérations décrites ci-dessus, le flanc 25 est à distance du jonc 14, la longueur de la pièce de désolidarisation 26 et de la pièce d'attaque 16 étant déterminée en conséquence. Ainsi lors de l'opération de montage après contact des moyens d'engagement 29 avec la portée d'engagement 8, la largeur de la gorge 24 est supérieure à l'épaisseur du jonc 14.

Pour démonter l'ensemble, par exemple à partir de la figure 5, il suffit d'effectuer, grâce à l'action des doigts 45 de la fourchette sur les faces 44 des pattes 47, un mouvement suivant la flèche F1 de la figure 6, d'une part, à la butée de débrayage afin que la pièce d'attaque 16 et plus particulièrement sa portée 21 soit au contact avec la portée 13 du talon 23 de la pièce d'accostage 4, et, d'autre part, une fois cette position obtenue, de faire intervenir dans le même sens axial un organe de manoeuvre, entre autre un organe de manoeuvre manuel, par exemple un tournevis, sur la face de la collerette radiale 31 dirigée vers le roulement 18 de façon à ce que, la pièce d'attaque 16 étant en butée sur la portée 13 de la pièce d'accostage 4, la pièce de désolidarisation 26 coulisse sur la périphérie externe de la pièce d'attaque 16, en refermant la gorge 24.

Ce coulissement s'effectue donc, dans le sens axial allant de la butée de débrayage 1 vers le dispositif débrayeur 2, en vainquant l'action de frottement des pattes 30 en contact de la portée 9 de la pièce d'accostage 4, jusqu'à ce que le flanc mobile 25 de l'extrémité de la pièce de désolidarisation 26, vienne au contact du jonc de solidarisation 14.

A partir de cette position et en continuant le mouvement la tranche 27, de par sa partie radiale 28, dont le diamètre externe est ici situé en-dessous de l'axe médian du jonc en contact avec le fond de la gorge 24, pousse le jonc 14 vers la portée tronconique 22 et le fait glisser le long de cette portée en le déployant, ceci est permis grâce à l'élasticité dudit jonc et à son pouvoir d'ouverture radiale. Le glissement du jonc 14 le long de la portée 22 s'effectue jusqu'au moment où ledit jonc quitte ladite portée et se trouve ensuite par son diamètre extérieur approximativement dans le fond de la gorge 11 et par son diamètre intérieur sur le diamètre extérieur de la pièce de désolidarisation 26 (fig. 6). Ceci est possible grâce au flanc incliné 25 qui, de par sa complémentarité de forme avec la portée 22, permet à la partie radiale 28 de passer dans le sens axial allant de la butée de débrayage 1 au dispositif débrayeur au-delà de l'axe vertical du jonc 14, situé dans sa gorge 11, et de venir au contact avec la portée 22 par son bord intérieur.

Comme visible à la figure 6, cette position rend inexistante la gorge 24 et empêche, en cas de manipulation indésirable, un retour du jonc 14 sur la portée 22 et donc dans la gorge 24 de la pièce d'attaque 16.

Il suffit, à partie de la position de la figure 6, d'effectuer un mouvement en sens inverse à la butée par appui des doigts 45 de la fourchette sur les faces 43 des pattes 46, ceci entraîne un mouvement de la butée 1 en sens inverse c'est-à-dire dans le sens allant du dispositif débrayeur vers la butée et permet ainsi une libération de la butée 1 par rapport à la pièce d'accostage 4 par glissement du jonc 14 sur les portées 21 et 12.

Ainsi qu'on l'aura compris, (D3 - D2)/2 doit être égal au moins à l'épaisseur du jonc 14.

De même, l'angle formé par l'axe de l'ensemble et la portée d'entraînement 22 de la pièce d'attaque 16 ainsi que l'angle forme par le même axe et la portée d'entraînement 10 de la pièce d'accostage 4 sont dimensionnés convenablement afin de permettre la transmission de l'effort en traction de l'ensemble.

Bien entendu l'invention n'est par limité aux formes de réalisation décrites mais embrasse toutes variantes dans la réalisationde ses divers éléments et dans ses applications dans le cadre des revendications, en particulier l'extrémité 33 des pattes 30 peut être chanfreinée, et la pièce d'accostage au lieu d'être rapportée sur le dispositif débrayeur par pincement, peut être rapportée à la faveur de doigts de retenue portant chacun une patte, de la collerette comme décrit dans la demande de brevet FR 2 544 037 du 11 avril 1983. En particulier, dans une variante de réalisation non représentée l'organe de découplage, au lieu d'être ouvert par une fente pour sa mise en place sur la pièce d'attaque qu'il doit équiper, peut présenter, régulièrement réparties le long de l'une et l'autre de ses tranches axiales d'extrémité, des échancrures, qui, circulairement alternées de l'une à l'autre de ces tranches, sont axialement imbriquées de l'une à l'autre de celles-ci.

## Revendications

1. Montage de butée de débrayage, du genre comportant, pour l'attelage d'une butée de débrayage (1) à un dipsositif débrayeur (2) d'un embrayage, une pièce (4), dite pièce d'accostage, dotée d'une portée d'engagement (8) située à l'extrémité d'une douille (6) s'étendant globalement axialement, qui est convenable rapportée sur ledit dipsositif débrayeur et des moyens de solidarisation en traction qui, établis entre la pièce d'accostage (4) et une pièce (16), dite pièce d'attaque, appartenant à la butée de débrayage (1), sont propres à assurer une liaison axiale entre lesdites pièces allant du dipsositif débrayeur à ladite butée de débrayage, lesdits moyens de solidarisation en traction comportant un jonc (14), dit jonc de solidarisation, qui, élastiquement déformable radialement, est établi annulairement autour de l'axe de l'ensemble et qui est, au moins en partie, en prise, d'une part, du côté de la butée de débrayage (1) avec une portée (10) de la pièce d'accostage (4) et d'autre part, du côté opposé, avec une portée (22) de la pièce d'attaque (16), ladite portée (22) de la pièce d'attaque (16) étant formée par l'un des flancs d'une gorge (24) prévue annulairement sur la pièce d'attaque (16), l'autre des flancs (27) étant mobile axialement par rapport au précédent et appartenant à une pièce mobile (26), dite pièce de désolidarisation, montée coulissante sur la pièce d'attaque (16) en étant distincte de celle-ci, caractérisé en ce que la pièce de désolidarisation (26) porte des moyens de positionnement (29), élastiquement déformable radialement vers l'intérieur, de diamètre externe supérieur, à l'état libre, au diamètre interieur de la portée d'engagement (8) de la douille (6) de la pièce d'accostage (4) et en ce que lesdits moyens de positionnement (29) sont adaptés à prendre appui, au montage sur ladite portée d'engagement en sollicitant ladite pièce de désolidarisation en direction d'une butée d'arrêt (32) prévue transversalement pour elle sur la butée de débrayage (1).

2. Montage de butée de débrayage selon la revendication 1, caractérisé en ce que les moyens de positionnement consistent en au moins une patte globalement axiale (30), d'un seul tenant avec la pièce de désolidarisation (26), élastiquement déformable radialement vers l'intérieur.

3. Montage de butée de débrayage selon les revendications 1 et 2, caractérisé en ce que la patte axiale (30) est située axialement en retrait par rapport à l'extrémité (27) de la pièce de désolidarisation (26) portant le flanc mobile (25) de la gorge (24) de la pièce d'attaque (16).

4. Montage de butée de débrayage selon la revendication 1, caractérisé en ce que la pièce de désolidarisation (26), de forme générale en L, présente, en saillie à sa périphérie externe, une collerette radiale (31), à son extrémité opposée à celle portant le flanc mobile (27), de diamètre externe supérieur au diamètre de la paroi axiale entourant le roulement à billes que comporte la butée de débrayage (1).

5. Montage de butée de débrayage selon la revendication 4, caractérisé en ce que la collerette (31) est dotée d'une saignée radiale (34), dans le prolongement d'une saignée axiale (35) formée dans la pièce de solidarisation (26), et d'un secteur aminci (36) disposé symétriquement diamétralement opposé à la saignée radiale (34).

6. Montage de butée de débrayage selon la revendication 4, caractérisé en ce que la collerette (31) présente, sur sa face dirigée vers la butée de débrayage (1), une plaque d'appui (37) accolée et maintenue sur ladite face.

7. Montage de butée de débrayage selon l'une quelconque des revendications 1 à 6, caractérisé en ce que le flanc (25) de la gorge (24) de la pièce d'attaque (16), oblique sur l'axe de l'ensemble s'éloignant dudit axe en se rapprochant du dipsositif débrayeur (2), a un diamètre externe inférieur au diamètre médian du jonc (14) monté sur le fond de ladite gorge (24).

8. Montage de butée de débrayage selon la revendication 7, caractérisé en ce que la pièce d'accostage (4) comporte une gorge de retenue (11') présentant de part et d'autre de son fond annulaire (11), d'une part une portée (10) inclinée sur l'axe de l'ensemble s'éloignant dudit axe en s'écartant de la butée de débrayage (1) et, d'autre part, une portée de retenue (12) inclinée sur l'axe de l'ensemble s'éloignant dudit axe en se rapprochant de la butée de débrayage.

9. Montage de butée de débrayage selon la revendication 8, caractérisé en ce que la portée de retenue (12) de la gorge (11) de la pièce d'accostage (4) est raccordée à un talon (23), dit talon d'arrêt de diamètre interne inférieur au diamètre externe de la portée de centrage (21) de la pièce d'attaque (16).

10. Montage de butée de débrayage selon la revendication 9, caractérisé en ce que le talon d'arrêt (23) comporte une portée d'arrêt (13), se raccordant à la portée de retenue (12), de forme complémentaire à la portée de centrage (21).

## Patentansprüche

1. Kupplungsausrücklageranordnung der Art, die zum Ankuppeln eines Kupplungsausrücklagers (1) an die Ausrückvorrichtung (2) einer Kupplung folgendes umfasst: ein sogenanntes Kopplungsstück (4), versehen mit einer Eingriffsfläche (8) am Ende einer Hülse (6), die sich im wesentlichen axial erstreckt und die auf geeignete Weise an der erwähnten Ausrückvorrichtung angebracht ist, und Zugverbindungselemente, die zwischen dem Kopplungsstück (4) und einem Teil (16), dem sogenannten Eingriffsteil, welches zum Kupplungsausrücklager gehört, angeordnet sind und eine axiale Verbindung zwischen den erwähnten Teilen von der Ausrückvorrichtung zum erwähnten Kupplungsausrücklager herstellen, wobei die erwähnten Zugverbindungselemente einen sogenannten Verbindungsring (14) aufweisen, der in radialer Richtung elastisch verformbar ist und rund um die Achse der Gesamtheit angebracht wird und der mindestens teilweise einerseits auf der Seite des Ausrücklagers (1) mit einer Fläche (10) des Kopplungselements (4) und andererseits auf der gegenüberliegenden Seite mit einer Fläche (22) des Eingriffselements (16) in Eingriff steht, wobei die erwähnte Fläche (22) des Eingriffselements (16) aus einer der Flanken einer Rille (24) besteht, die ringförmig am Eingriffselement (16) angebracht ist, während die andere Flanke (27) in axialer Richtung zur vorgenannten beweglich ist und zu einem beweglichen Element (26), dem sogenannten Trennelement, gehört, welches gleitend am Eingriffselement (16) angebracht und von diesem verschieden ist, dadurch gekennzeichnet, dass das Trennelement (26) über Positioniervorrichtungen(29) verfügt, die radial nach innen elastisch verformbar sind, mit einem Aussendurchmesser, der im gelösten Zustand grösser ist als der Innendurchmesser der Einrückfläche (8) der Hülse (6) des Kopplungsstücks (4), und dass die erwähnten Positioniervorrichtungen (29) dazu geeignet sind, bei der Montage auf der erwähnten Eingriffsfläche zum Aufliegen zu kommen und dabei das erwähnte Trennelement in Richtung auf einen Anschlag (32) zu beanspruchen, welcher seinerseits in Querrichtung auf dem Kupplungsausrücklager (1) vorgesehen ist.

2. Kupplungsausrücklageranordnung gemäss Anspruch 1, dadurch gekennzeichnet, dass die Positioniervorrichtungen aus wenigstens einer im wesentlichen axial verlaufenden Klammer (30), aus einem Stück mit dem Trennelement (26), bestehen, die elastisch und in radialer Richtung nach innen verformbar ist.

3. Kupplungsausrücklageranordnung gemäss den Ansprüchen 1 und 2, dadurch gekennzeichnet, dass die axiale Klammer (30) gegenüber dem Ende (27) des Trennelements (26) mit der beweglichen Flanke (25) der Rille (24) des Eingriffselements (16) axial versetzt angeordnet ist.

4. Kupplungsausrücklageranordnung gemäss Anspruch 1, dadurch gekennzeichnet, dass das Trennelement (26), welches eine allgemeine L-Form aufweist, am äusseren Kreisumfang vorspringend einen radial verlaufenden Kragen (31) auf der Seite aufweist, die der Seite mit dem beweglichen Flansch (27) gegenüberliegt, wobei der Aussendurchmesser grösser ist als der Durchmesser der axialen Wandung, die das Kugellager mit dem Kupplungsausrücklager (1) umgibt.

5. Kupplungsausrücklageranordnung gemäss Anspruch 4, dadurch gekennzeichnet, dass der Kragen (31) mit einem radial verlaufenden Einschnitt (34) in der Verlängerung eines axial verlaufenden Einschnitts (35) im Verbindungselement (26) versehen ist, sowie mit einem verkleinerten Querschnitt (36) in symmetrischer Anordnung diametral gegenüber dem radialen Einschnitt (34).

6. Kupplungsausrücklageranordnung gemäss Anspruch 4, dadurch gekennzeichnet, dass der Kragen (31) auf der dem Kupplungsausrücklager (1) zugewandten Seite eine Auflageplatte (37) aufweist, die an dieser Fläche angebracht ist und festgehalten wird.

7. Kupplungsausrücklageranordnung gemäss einem der Ansprüche 1 bis 6, dadurch gekennzeichnet, dass die bewegliche Flanke (25) der Rille (24) des Eingriffselements (16), schräg zur Achse der Einheit von dieser Achse weg und zur Ausrückvorrichtung (2) hin einen Aussendurchmesser aufweist, der geringer ist als der Mitteldurchmesser des Ringes (14), der am Boden der erwähnten Rille (24) angebracht ist.

8. Kupplungsausrücklageranordnung gemäss Anspruch 7, dadurch gekennzeichnet, dass das Kopplungsstück (4) eine Befestigungsrille (11') aufweist, die beiderseits ihres Ringbodens (11) auf der einen Seite eine Fläche (10) besitzt, die zu der Achse der sich von dieser Achse entfernenden Einheit hin geneigt ist und sich vom Kupplungsausrücklager (1) entfernt, und andererseits eine Befestigungsfläche (12), die zu der Achse der sich von dieser Achse entfernenden Einheit geneigt ist und sich dem Kupplungsausrücklager annähert.

9. Kupplungsausrücklageranordnung gemäss Anspruch 8, dadurch gekennzeichnet, dass der Befestigungsbereich (12) der Rille (11) des Kopplungsstücks (4) mit einem sogenannten Anschlag-Absatz (23) verbunden ist, dessen Innendurchmesser geringer ist als der Aussendurchmesser der Zentrierfläche (21) des Eingriffselements (16).

10. Kupplungsausrücklageranordnung gemäss Anspruch 9, dadurch gekennzeichnet, dass der Anschlag-Absatz (23) eine Anschlagfläche (13) besitzt, die mit der Befestigungsfläche (12) in Verbindung steht und in ihrer Form die Zentrierfläche (21) ergänzt.

**Claims**

1. A clutch release bearing assembly of the kind comprising, to couple a clutch release bearing (1) to a clutch release device (2), a part (4) referred to as a coupling part provided with an engagement bearing surface (8) situated at the end of a bush (6) which extends substantially axially and which is suitably fastened to the said release device, and fastening means operative in traction which, situated between the coupling part (4) and a part (16), referred to as the drive part, which is part of the said clutch release bearing (1), are adapted to ensure a connection between the said parts in the axial direction from the clutch release device to the said clutch release bearing, the said fastening means operative in traction comprising a ring (14), referred to as a fastening ring, which is elastically deformable radially and is disposed around the axis of the assembly, and which is at least partly engaged on the one hand, on the clutch release bearing (1) side, with a bearing surface (10) on the coupling part (4) and on the other hand, on the other side, with a bearing surface (22) on the drive part (16), the said bearing surface (22) on the drive part (16) being formed by one of the flanks of the groove (24) provided annularly on the drive part (16), the other flank (27) being movable axially relative to the previously mentioned flank and forming part of a movable part (26), referred to as the decoupling part, slidably mounted on the drive part (16) being distinct from the latter, characterized in that the decoupling part (26) comprises positioning means (29), elastically deformable radially inwards, having an outside diameter when unstressed which is larger than the inside diameter of the said engagement bearing surface (8) of the bush (6) of the coupling part (4) and in that the said positioning means (29) are adapted to bear on the said engagement bearing surface during assembly so as to drive the said decoupling part towards an arresting abutment (32) provided transversely for it on the clutch release bearing (1).

2. A clutch release bearing assembly according to Claim 1, characterized in that the positioning means comprise at least one substantially axial lug (30), in one piece with the decoupling part (26), and elastically deformable radially inwards.

3. A clutch release bearing assembly according to Claims 1 and 2, characterized in that the axial lug (30) is situated axially set back relative to the end (27) of the decoupling part (26) bearing the movable flank (25) of the groove (24) of the drive part (16).

4. A clutch release bearing assembly according to Claim 1, characterized in that the substantially L-shaped decoupling part (26) comprises a radial flange (31), projecting from its outside periphery at its end opposite to that bearing the movable flank (27), with an outside diameter larger than the diameter of the axial wall surrounding the ball bearing which the clutch release bearing (1) comprises.

5. A clutch release bearing assembly according to Claim 4, characterized in that the flange (31) is provided with a radial groove (34), prolonging an axial groove (35) made in the decoupling part (26), and a sector of reduced thickness (36) disposed symmetrically diametrically opposite the radial groove (34).

6. A clutch release bearing assembly according to Claim 4, characterized in that the flange (31) comprises on its face turned towards the clutch release bearing (1), a bearing plate (37) touching and held against the said face.

7. A clutch release bearing assembly according to any one of Claims 1 to 6, characterized in that the movable flank (27) of the groove (24) of the drive part (16) is oblique to the axis of the assembly, diverging from the said axis as it approaches the clutch release device (2), and has an outside diameter less than the median diameter of the ring (14) mounted on the bottom of the said groove (24).

8. A clutch release bearing assembly according to Claim 7, characterized in that the coupling part (4) comprises a retaining groove (11') comprising on one side of its annular bottom (11) a bearing surface (10) inclined to the axis of the assembly and diverging from the said axis as it gets further from the clutch release bearing (1) and, on the other side, a retaining bearing surface (12) inclined to the axis of the assembly and diverging from the said axis as it approaches the clutch release bearing.

9. A clutch release bearing assembly according to Claim 8, characterized in that the retaining bearing surface (12) of the groove (11) of the coupling part (4) is connected to a tab (23), referred to as an arresting tab, with an inside diameter less than the outside diameter of the centering bearing surface (21) of the drive part (16).

10. A clutch release bearing assembly according to Claim 9, characterized in that the arresting tab (23) comprises an abutment bearing surface (13) which joins the retaining bearing surface (12) and has a complementary shape to the centering bearing surface (21).

EP 0 220 982 B1

FIG.1

FIG.2

EP 0 220 982 B1

FIG.3

FIG.5

FIG.4

FIG.6